# EUROPÄISCHE PATENTANMELDUNG

(11) **EP 1 241 344 A2**
(43) Veröffentlichungstag der Anmeldung: **18.09.2002**
(21) Anmeldenummer: 02001834.7
(22) Anmeldetag: 26.01.2002
(51) Int. Cl.: F02M 35/10, F02D 9/10

(54) **Luftansaugkanalsystem für eine Brennkraftmaschine**

(30) Priorität: 12.03.2001 DE 10112070
(71) Anmelder: Pierburg GmbH, 41460 Neuss (DE)
(72) Erfinder: Simons, Norbert, 40221 Düsseldorf (DE)
(74) Vertreter: Ter Smitten, Hans

(57) **Zusammenfassung**

Luftansaugkanalsystem für eine Brennkraftmaschine mit einem Saugrohrgehäuse mit zu den Zylindern führenden Ansaugkanälen, die wiederum in zwei Einzelkanäle unterteilt sind, von denen jeweils ein Einzelkanal eine Welle mit einer Drallklappe aufweist, die durch eine Antriebsvorrichtung drehbar ist, wobei die Welle (6) mit der Drallklappe (7) in einem Gehäuseteil (9) gelagert ist, wobei das Gehäuseteil (9) in dem Saugrohrgehäuse (2) einsetzbar ist, derart, daß die Welle (6) in die Antriebsvorrichtung eingreift.

## Beschreibung

Die Erfindung betrifft ein Luftansaugkanalsystem für eine Brennkraftmaschine mit einem Saugrohrgehäuse mit zu den Zylindern führenden Ansaugkanälen, die wiederum in zwei Einzelkanäle unterteilt sind, von denen jeweils ein Einzelkanal eine Welle mit einer Drallklappe aufweist, die durch eine Antriebsvorrichtung drehbar ist.

Derartige Luftansaugkanalsysteme sind für Otto- und Dieselbrennkraftmaschinen im Einsatz, die mit einer Direkteinspritzung arbeiten. Die Direkteinspritzung besitzt das Potential einer deutlichen Verbrauchseinsparung und stellt damit einen wichtigen Baustein für die notwendige Absenkung der verkehrsbedingten CO₂-Emmision dar um die Einlaßströmung in den Einlaßkanälen hinsichtlich des Betriebsbereiches bzw. der Drehzahl zu optimieren, weist einer der zwei zu einem Zylinder führenden Einzelkanäle eine Drallklappe auf. Während bei Volllast und/oder hoher Drehzahl kein Drall, jedoch optimale Füllung, erforderlich ist, ist für niedrige Last jedoch ein leichter Drall erwünscht, der die Rauchemmission deutlich senken kann. Für die niedrige Last wiederum ist die Füllung von geringer Bedeutung. Die Anordnung der Drallklappen im Saugrohr erfordert einen relativen großen konstruktiven Aufwand. Service-Arbeiten sind dementsprechend mit großem Montage- und Demontageaufwand verbunden.

Hiervon ausgehend liegt der Erfindung die Aufgabe zugrunde, Maßnahmen aufzufinden, die die o. g. Nachteile vermeiden.

Diese Aufgabe wird dadurch gelöst, daß die Welle mit der Drallklappe in einem Gehäuseteil gelagert ist, wobei das Gehäuseteil in dem Saugrohrgehäuse einsetzbar ist, derart daß die Welle in die Antriebsvorrichtung eingreift.

Auf diese Weise wird ein Luftansaugkanalsystem geschaffen, bei dem die Drallklappe vor dem Einbau ins Saugrohrgehäuse in einem Gehäuseteil vormontiert werden kann. Dies bietet den Vorteil, daß sich der Einbau der Drallklappen auf einen minimalen Montageaufwand reduziert. Eventuelle Service-Arbeiten sind lediglich mit geringem Montage- und Demontageaufwand verbunden.

Als besonders vorteilhaft hat es sich erwiesen, wenn das Gehäuseteil durch eine Klemmverbindung im Saugrohrgehäuse fixiert ist. Dabei kann das Gehäuseteil auf der von der Drallklappe abgewandten Oberfläche zumindest teilweise eine derartige Rauhigkeit aufweisen, daß die Klemmverbindung aufgrund der Oberflächenbeschaffenheit herstellbar ist. Alternativ kann das Gehäuseteil auf der von der Drallklappe abgewandten Oberfläche Rippenelemente aufweisen, die sich beim Einsetzen in den Einzelkanal verformen und auf diese Weise die Klemmverbindung herstellen. Als montagetechnisch besonders vorteilhaft hat es sich erwiesen, wenn das Gehäuseteil aus einem Stück gefertigt ist. Vorteilhafterweise weist eine zu den Zylindern der Brennkraftmaschine gerichtete Seite des Gehäuseteils ein umlaufendes Dichtungselement auf. In besonderer Weise kann dieses umlaufende Dichtungselement an das Gehäuseelement angespritzt sein.

Insbesondere bei der Verwendung eines einstückigen Gehäuseteils ist es vorteilhaft, wenn die Drallklappe mittels Clipselementen mit der Welle verbunden ist. Es ist jedoch auch möglich, daß zwei Wellenabschnitte vorgesehen sind, zwischen denen die Drallklappe eingeklemmt ist. Des weiteren können Anschlagelemente vorgesehen sein, die in axialer und/oder radialer Richtung im Bezug auf die Wellenachse auf die Drallklappe wirken. In montagetechnischer Hinsicht besonders vorteilhaft ist es, wenn das Gehäuseteil beide Einzelkanäle umfaßt, d. h. den Einzelkanal mit Drallklappe und den Einzelkanal ohne Drallklappe und auf diese Weise die Teilung des Ansaugkanals gewährleistet. Denkbar ist natürlich aber auch ein Gehäuseteil, das lediglich die Drallklappe umfaßt und in einen Einzelkanal eingeschoben wird.

Ausführungsbeispiele der Erfindung sind in der Zeichnung dargestellt und wird nachfolgend beschrieben.

Diese Zeichnung zeigt:
- Figur 1: einen Ausschnitt des erfindungsgemäßen Luftansaugkanalsystems in einer perspektivischen Ansicht,
- Figur 2: eine Ausführungsform des Gehäuseteils mit Drallklappe in Explosionsansicht,
- Figur 3: eine Vorderansicht einer Ausführungsform einer Drallklappe,
- Figur 4: eine Schnittansicht gemäß IV-IV aus Figur 3,
- Figur 5: eine Vorderansicht einer weiteren Ausführungsform einer Drallklappe, und
- Figur 6: eine Seitenansicht der Drallklappe aus Figur 5.

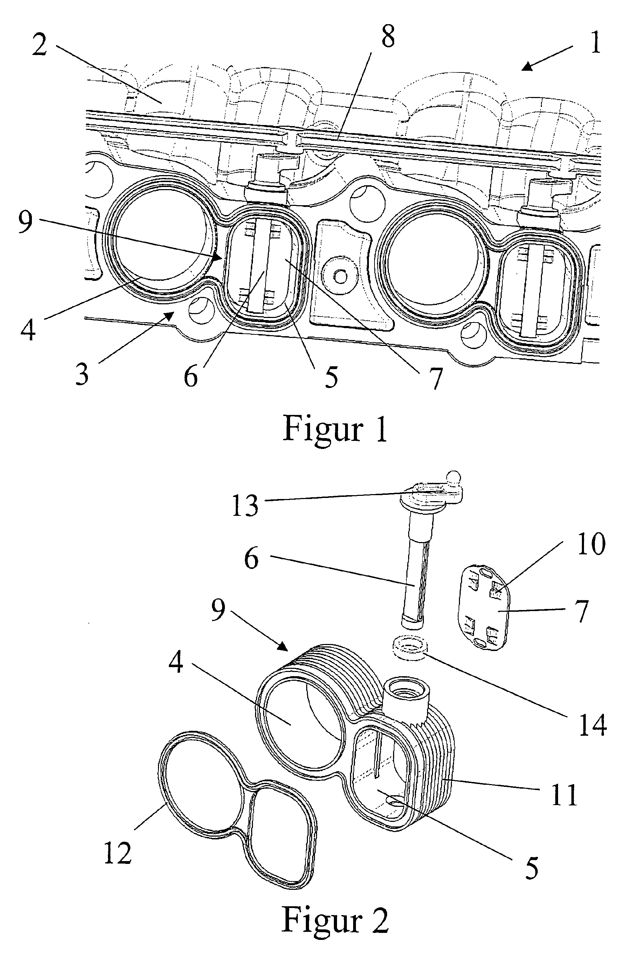

Figur 1 zeigt in perspektivischer Ansicht einen Ausschnitt eines erfindungsgemäßen Luftansaugkanalsystems 1. Dabei weist ein Saugrohrgehäuse 2 Ansaugkanäle 3 auf, die jeweils in Einzelkanäle 4 und 5 unterteilt sind. In dem Einzelkanal 5 ist eine Welle 6 mit einer Drallklappe 7 angeordnet, wobei die Wellen 6 durch eine Antriebsvorrichtung 8 betätigt werden.

Wie die Explosionsansicht in Figur 2 deutlich zeigt, ist die Welle 6 in einem einstückigen Gehäuseteil 9 gelagert. In dieser besonderen Ausführungsform umfaßt das Gehäuseteil 9 sowohl den Einzelkanal 4 als auch den Einzelkanal 5 in den die Welle 6 reicht. Auf der Welle 6 ist mittels Clipselementen 10 die Drallklappe 7 angeordnet. Auf der von der Drallklappe 7 abgewandten Oberfläche des Gehäuseteiles 9 sind im vorliegenden Ausführungsbeispiel Rippenelemente 11 angeordnet, die sich beim Einsetzen des Gehäuseteils 9 in das Saugrohrgehäuse 2 verformen können und dementsprechend eine Klemmverbindung herstellen. Auf der zu den Zylindern hinweisenden Oberfläche des Gehäuseteiles 9 ist ein umlaufendes Dichtungselement 12 vorgesehen, das jedoch auf bekannte Weise auch direkt an das Gehäuseteil 9 angespritzt werden kann. An der Welle 6 ist ein Hebel 13 vorgesehen, der beim Einsetzen des Gehäuseteiles 9 in das Saugrohrgehäuse 2 in die Antriebsvorrichtung 8 eingreift. Abgedichtet wird die Welle 6 in Bezug auf das Gehäuseteil 9 durch einen Lippendichtring 14 oder ähnlichem. Es sollte deutlich sein, daß natürlich auch ein Gehäuseteil vorgesehen werden kann, das lediglich den Einzelkanal 5 umfaßt, währenddessen der Einzelkanal 4 schon im Saugrohrgehäuse 2 ausgebildet ist.

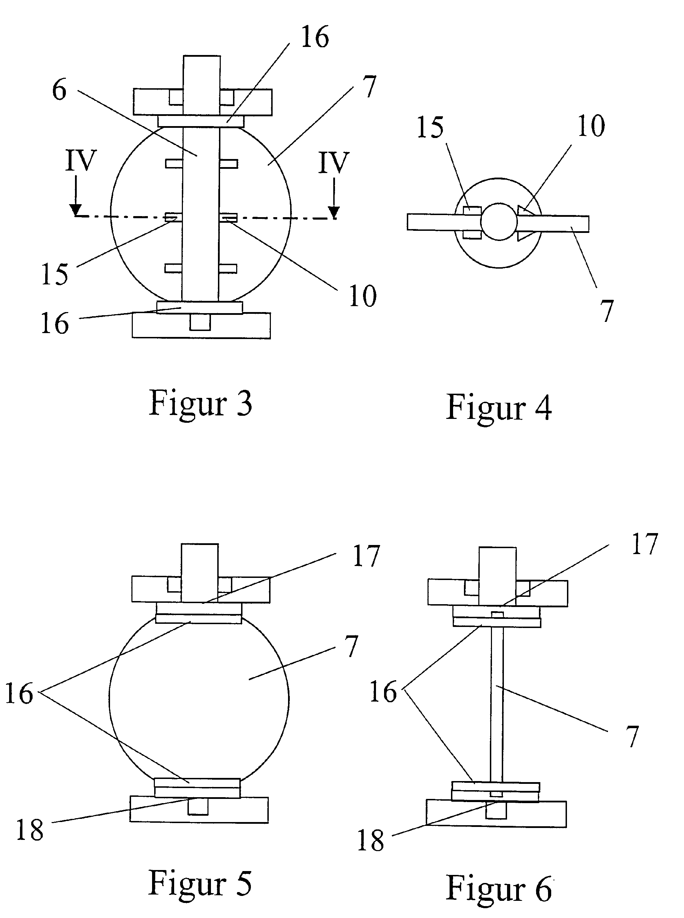

Figur 3 zeigt eine weitere mögliche Ausführungsform der Drallklappe 7. Dabei ist die Drallklappe 7 durch die Welle 6 gesteckt und mittels Clipselementen 10 befestigt. Anschlagelemente 15 und 16 wirken dabei in radialer und axialer Richtung im Bezug auf die Wellenachse der Welle 6 auf die Drallklappe 7. Besonders deutlich ist die Befestigung der Drallklappe 7 mittels der Clipselemente 10 in Figur 4 zu sehen. Die Anschlagelemente 15 sorgen hierbei für den Endanschlag in radialer Richtung der Wellenachse der Welle 6.

Eine weitere Möglichkeit der Anbringung der Drallklappe 7 ist in den Figuren 5 und 6 dargestellt. Bei dieser Ausführungsform ist die Drallklappe zwischen Wellenabschnitten 17 und 18 eingeklemmt und durch die Anschläge 16 in axialer Richtung fixiert.

## Patentansprüche

1. Luftansaugkanalsystem für eine Brennkraftmaschine mit einem Saugrohrgehäuse mit zu den Zylindern führenden Ansaugkanälen, die wiederum in zwei Einzelkanäle unterteilt sind, von denen jeweils ein Einzelkanal eine Welle mit einer Drallklappe aufweist, die durch eine Antriebsvorrichtung drehbar ist, **dadurch gekennzeichnet, daß** die Welle (6) mit der Drallklappe (7) in einem Gehäuseteil (9) gelagert ist, wobei das Gehäuseteil (9) in dem Saugrohrgehäuse (2) einsetzbar ist, derart, daß die Welle (6) in die Antriebsvorrichtung eingreift.

2. Luftansaugkanalsystem nach Anspruch 1, **dadurch gekennzeichnet, daß** das Gehäuseteil (9) durch eine Klemmverbindung im Saugrohrgehäuse (2) fixiert ist.

3. Luftansaugkanalsystem nach Anspruch 2, **dadurch gekennzeichnet, daß** das Gehäuseteil (9) auf der von der Drallklappe (7) abgewandten Oberfläche zumindest teilweise eine derartige Rauhigkeit aufweist, daß die Klemmverbindung aufgrund der Oberflächenbeschaffenheit herstellbar ist.

4. Luftansaugkanalsystem nach Anspruch 2, **dadurch gekennzeichnet, daß** das Gehäuseteil (9) auf der von der Drallklappe (7) abgewandten Oberfläche Rippenelemente (11) aufweist.

5. Luftansaugkanalsystem nach einem der vorhergehenden Ansprüche, **dadurch gekennzeichnet, daß** das Gehäuseteil (9) aus einem Stück gefertigt ist.

6. Luftansaugkanalsystem nach einem der vorhergehenden Ansprüche, **dadurch gekennzeichnet, daß** eine zu den Zylindern der Brennkraftmaschine gerichtete Seite des Gehäuseteils (9) ein umlaufendes Dichtungselement (12) aufweist.

7. Luftansaugkanalsystem nach Anspruch 6, **dadurch gekennzeichnet, daß** das umlaufende Dichtungselement angespritzt ist.

8. Luftansaugkanalsystem nach einem der vorhergehenden Ansprüche, **dadurch gekennzeichnet, daß** die Drallklappe (7) mittels Clipselementen (10) mit der Welle (6) verbunden ist.

9. Luftansaugkanalsystem nach einem der Ansprüche 1-7, **dadurch gekennzeichnet, daß** zwei Wellenabschnitte (17,18) vorgesehen sind, zwischen denen die Drallklappe (7) eingeklemmt ist.

10. Luftansaugkanalsystem nach einem der Ansprüche 8-9, **dadurch gekennzeichnet, daß** Anschlagelemente (15, 16) vorgesehen sind, die in axialer und/oder radialer Richtung in Bezug auf die Wellenachse auf die Drallklappe (7) wirken.

11. Luftansaugkanalsystem nach einem der vorhergehenden Ansprüche, **dadurch gekennzeichnet, daß** das Gehäuseteil (9) beide Einzelkanäle (4, 5) umfaßt.
